# DEMANDE DE BREVET EUROPEEN

(11) **EP 0 611 914 A1**
(43) Date de publication de la demande: **24.08.1994**
(21) Numéro de dépôt: 94400195.7
(22) Date de dépôt: 31.01.1994
(51) Int. Cl.: F16L 55/165, E21B 7/20

(54) **Tube flexible qui se dispose dans le sol en queue d'une machine de creusement mobile**

(30) Priorité: 19.02.1993 FR 9301885
(71) Demandeur: Lionel, Richard, F-74200 Thonon les Bains (FR)
(72) Inventeur: Lionel, Richard, F-74200 Thonon les Bains (FR)

(57) **Abrégé**

Ce dispositif est composé d'un tube capable d'adopter un diamètre plus grand lorsqu'il est retourné sur lui-même qui est placé en queue d'une machine de creusement mobile et est mis en place progressivement au fur et à mesure de l'avance de la machine.

Le tube (1) est flexible et comporte à l'intérieur des fentes longitudinales (2) ou peut être composé de deux couches distincts et peut être consolidé à l'aide de matière injectée ou d'une armature lors de son retournement.

Après amorce du retournement, la machine qui peut être composée de modules mobiles (a,b,c) et d'une tête de creusement (d), à l'aide d'un vérin (5) muni d'un système de préemption (6), saisit le tube en son diamètre intérieur et le tire vers elle ce qui entraîne le retournement progressif du tube sur lui-même.

Cette invention est destinée à la mise en place de liaisons souterraines.

## Description

La présente invention est destinée à la mise en place de liaisons souterraines.

Jusqu'à présent, la mise en place d'un tuyau flexible sous la terre nécessitait de creuser une tranchée puis de la reboucher une fois le tuyau déposé au fond.

La présente invention est un tube flexible conçu de telle manière qu'il puisse être disposé dans le sol en queue d'une machine de creusement mobile, donc sans avoir à creuser de tranchée.

Le problème principal que l'on peut rencontrer dans une telle technique est la quasi impossibilité de faire glisser sur une grande longueur un tube en matière flexible de diamètre proche de celui du trou à cause des frottements induits entre le tuyau et la matière. D'autre part, si on réduit le diamètre du tuyau par rapport au trou pour faciliter le coulissement, il y aura du jeu entre le tuyau et la galerie ce qui n'est pas le résultat voulu et peut provoquer un effondrement de la matière.

La présente invention résout ce problème en interdisant tout frottement entre la matière traversée et le tube mais au contraire permet une dépose délicate de celui-ci.

Ce dispositif est caractérisé en ce qu'il est composé d'un tube qui est capable d'adopter un diamètre plus grand lorsqu'il est retourné sur lui-même. Ce tube est flexible et caractérisé en ce qu'il est capable de se retourner sur lui même et qu'il comporte à l'intérieur des coupures longitudinales. La caractéristique d'un tel tube est que lorsqu'on le retourne sur lui-même, l'épaisseur coupée se retrouve sur l'extérieur du tube en forme étoilée ce qui crée sur l'extérieur une alternance de vide et de matière et donc un tube différent, de diamètre intérieur et extérieur plus grand. L'augmentation du diamètre extérieur du tube en se retournant permet d'épouser progressivement la forme du tunnel sans glissement, et l'augmentation du diamètre intérieur permet le coulissement du même tube non encore retourné.

Ce tube est placé en queue d'une machine de creusement mobile et est mis en place progressivement au fur et à mesure de l'avance de la machine. Ainsi le tube, au fur et à mesure de sa dépose, maintient la galerie, assure une liaison entre la machine et l'extérieur (alimentation, évacuation des déchets, ...) et, une fois complètement installé, assure l'étanchéité du tunnel pour ensuite servir de gaine pour des câbles ou directement de canalisation.

Les fentes ou vides créés sur l'extérieur du tube lors du retournement seront naturellement comblés par l'effritement de la terre ce qui rigidifiera le tube. Cependant, on peut combler ce vide au fur et à mesure du retournement en y injectant une matière liquide ou solide afin de consolider le tube et la galerie.

Pour amorcer le système, il convient de retourner le bout du tube sur lui-même et de l'enfiler dans le trou derrière la machine de creusement mobile. Ensuite, la machine équipée d'un système de préemption saisit le tube par l'intérieur et le tire vers elle ce qui provoque le retournement progressif du tube. Cette action sera répétée à chaque pas d'avance de la machine.

La quasi suppression des frottements entre la matière traversée et le tube rend possible des déposes de grandes longueurs, en l'absence de tranchées. De plus, le tube placé en queue de la machine assure la liaison entre la machine et l'extérieur en suivant sa trajectoire. L'unicité du tube assure une liaison continue et donc étanche. Enfin, la consolidation progressive du tube lors de son installation assure les caractéristiques nécessaires de résistance de la liaison souterraine installée.

L'invention est décrite ci-après à l'aide d'exemples et de références aux dessins joints.

La figure 1 est une vue en coupe de la section du tube (1) qui comporte à l'intérieur des coupures longitudinales (2).

La figure 2 présente ce même tube (1) en coupe longitudinale et montre schématiquement le retournement du tube sur lui même.

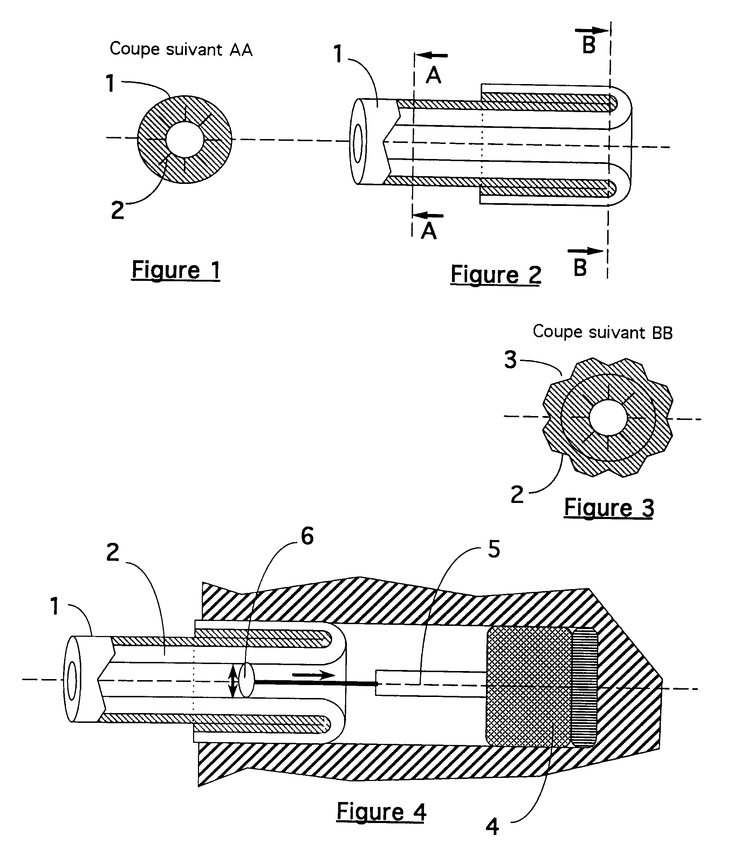

La vue en coupe de la section du tube en cours de retournement de la figure 3 présente schématiquement l'augmentation du diamètre du tube retourné générée par les coupures (2) qui ont entraînées cette alternance de vides (3) et de matière sur l'extérieur.

La figure 4 présente schématiquement le tube en cours d'installation en queue de la machine de creusement mobile (4) équipée d'un vérin (5) muni d'un système de préemption (6).

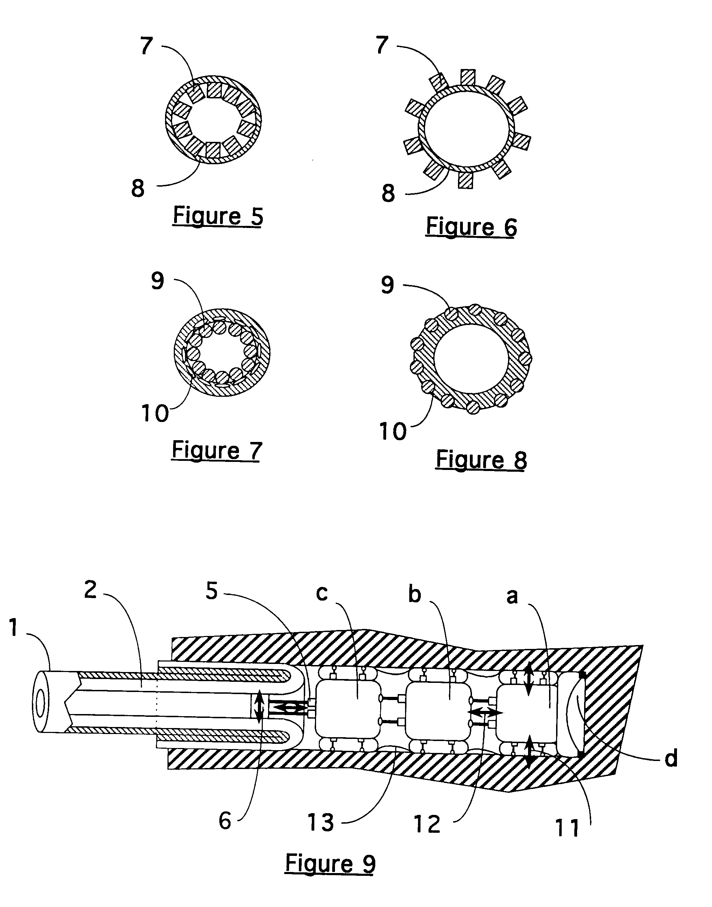

Figures 5 et 6 : Le tube peut être composé d'au moins deux couches, l'une (8) donnant la forme tubulaire et l'élasticité, l'autre (7) apportant le changement de diamètre : La figure 5 représente la section du tube avant son retournement, la figure 6 représente la section du tube une fois installé. La couche (8) doit être en matière souple alors que la couche (7) peut être composée de petits modules rigides. Pour faciliter la préemption, la couche (7) peut être rugueuse ou munie d'encoches.

Figure 7 et 8 : L'introduction d'une armature dans la structure du tube lors du retournement de celui-ci permettra d'apporter une rigidité au tube installé et de consolider son nouveau diamètre. Cette armature peut être créée par des câbles (9) placés au départ dans le tube qui s'emboîtent sur l'extérieur du tube dans les fentes (10) prévues à cet effet lors de son retournement: La figure 7 représente la section du tube avant son retournement; Les câbles (9) sont situés à l'intérieur du tube. La figure 8 représente la section du tube une fois installé; Les câbles (9) ont été emboîtés dans les fentes (10) prévues à cet effet lors du retournement du tube sur lui-même.

Figure 9 : La machine de creusement mobile est composée de modules pleine section reliés entres eux par des vérins. Ces modules sont capables à l'aide de vérins de s'immobiliser dans la galerie et de se déplacer les uns par rapport aux autres tel que décrit schématiquement figure 9 où : (a), (b) et (c) sont les modules qui composent la machine, (11) est le mouvement généré par des vérins qui permet à chaque module de se maintenir immobile (immobilisation ou libération) dans la galerie en exerçant une pression perpendiculaire à l'axe de la machine, (12) est le mouvement généré par des vérins qui assure à chaque module un déplacement longitudinal en exerçant une pression suivant l'axe de la machine sur le module adjacent, et (d) représente schématiquement la tête rotative de creusement.

### Exemple de fonctionnement chronologique :

Tout d'abord, immobilisation de tous les modules sauf celui de tête (a). Ensuite, rotation de la tête de creusement (d) et poussée du module (a) vers l'avant. Puis arrêt de la tête (d) et immobilisation du module (a). Le module (b) se libère et se déplace vers le module (a) puis s'immobilise. Puis même mouvement pour tous les modules chacun à leur tour.

Tous les modules sont ensuite immobilisés, l'opération de traction du tube d'un pas peut s'effectuer: Le module (c) saisit le tube par l'intérieur et le tire vers lui par l'intermédiaire de vérins (5) équipés d'un système de préemption (6) ce qui provoque le retournement progressif du tube sur lui-même. La course des vérins (5) doit être égale à deux pas d'avance de la machine.

A ce stade, la machine a avancé d'un pas, le tube a été installé d'une longueur égale à un pas. Ces actions seront ensuite répétées jusqu'à installation complète du tube.

Le nombre de modules nécessaire peut varier en fonction du terrain, de la longueur tractée et du diamètre. Les modules peuvent être de diamètre légèrement décroissant du module (a) au module (c) pour faciliter le déplacement dans la galerie. Des soufflets (13) situés entre les modules assurent l'étanchéité du système.

L'utilisation de trois vérins pour le mouvement (12) permet de modifier la trajectoire en provoquant une inclinaison entre deux modules. Les vérins sont munis de règles électroniques et sont connectés à un calculateur qui suit et commande depuis l'extérieur l'ensemble des mouvements de la machine. Les câbles et tuyaux d'alimentation sont disposés dans le corps de la machine et sortent par le tube en cours d'installation.

La tête de creusement (d) est munie d'outils de coupe appropriés et est entraînée en rotation par un moteur hydraulique solidaire du module (a) . L'évacuation des déchets s'effectue à l'aide de tuyaux flexibles situés dans le corps de la machine et dans le tube en cours d'installation, dans lesquels circulent un fluide sous pression qui transporte les déchets concassés.

On peut compléter le système par une rampe tubulaire d'amorçage qui permettra au dispositif de rentrer dans le sol sous une inclinaison donnée. Cette rampe peut être un tube métallique dans lequel le système selon l'invention est amorcé. Ce tube métallique sera maintenu contre le sol au point de départ souhaité et suivant une inclinaison donnée.

## Revendications

1. Tube flexible qui se dispose dans le sol caractérisé en ce qu'il est capable de se retourner sur lui-même et qu'il comporte à l'intérieur des coupures longitudinales (2) caractérisées en ce qu'elles créent lors du retournement une alternance de vides et de matière répartis sur l'extérieur du tube et donc un tube de diamètre intérieur et extérieur plus grand.

2. Tube selon la revendication 1 caractérisé en ce qu'il est composé d'au moins deux couches, l'une (8) donnant la forme tubulaire et l'élasticité, l'autre (7) apportant le changement de diamètre.

3. Dispositif selon la revendication 1 ou 2 caractérisé en ce que les fentes ou vides (3) créés sur l'extérieur du tube soient comblés par une matière après ou au fur et à mesure du retournement.

4. Dispositif selon la revendication 1 ou 2 ou 3 caractérisé en ce qu'il est muni d'une armature (9) placée à l'intérieur du tube qui s'emboîte dans les fentes (10) du tube lors de son retournement.

5. Dispositif qui se dispose dans le sol caractérisé en ce qu'il est composé d'un tube qui est capable d'adopter un diamètre plus grand lorsqu'il est retourné sur lui-même et caractérisé en ce que ce tube est placé en queue d'une machine de creusement mobile et est mis en place progressivement au fur et à mesure de l'avance de la machine.

6. Dispositif selon la revendication 5 caractérisé en ce que la machine (4), par l'intermédiaire d'un vérin (5) muni d'un système de préemption (6), saisit le tube en son diamètre intérieur, le tire et provoque ainsi le retournement progressif de celui-ci sur lui-même, le tube ayant été préalablement amorcé dans le trou.

7. Dispositif selon la revendication 5 ou 6 caractérisé en ce que la machine est composée de modules pleine section caractérisés en ce qu'ils peuvent s'immobiliser dans la galerie ou se déplacer les uns par rapport aux autres et assurer ainsi l'installation du tube.

8. Dispositif selon n'importe quelle revendication de 5 à 7 caractérisé en ce qu'il est amorcé dans un tube métallique maintenu contre le sol suivant une inclinaison donnée.
